# EUROPEAN PATENT APPLICATION

(11) **EP 4 628 191 A1**
(43) Date of publication of application: **08.10.2025**
(21) Application number: 24315121.4
(22) Date of filing: 04.04.2024
(51) Int. Cl.: B01D 53/04, B01D 53/26, H01M 10/613, H01M 10/625

(54) **AIR DRYING ELEMENT**

(71) Applicant: MANN+HUMMEL GmbH, 71636 Ludwigsburg (DE)
(72) Inventor: Haller, Andreas, 71636 Ludwigsburg (DE); Kravanja, Axel, 71636 Ludwigsburg (DE); Singh, Harsh, 35200 Rennes (FR)
(74) Representative: Mann + Hummel Intellectual Property

(57) **Abstract**

An air drying element (1) is for attachment to a coolant reservoir (3) in a coolant circuit, the coolant reservoir (3) comprising a coolant outlet (2). The air drying element (1) includes a housing (4) comprising an air-permeable housing wall (5) in which a drying agent is arranged, and a sealing device (6) configured to seal the coolant outlet (2) when the air drying element (1) is in a position of use.

## Description

### Technical Field

Embodiments relate to an air drying element for attachment to a coolant reservoir in a coolant circuit, wherein the air drying element comprises a housing in which a drying agent is arranged. The embodiments further relate to the use of such an air drying element for dehumidifying a coolant reservoir in a coolant circuit of an immersion-cooled battery system. Finally, the embodiments also relate to a coolant reservoir with such an air drying element.

### Background Art

Battery systems, which are widely used in electromobility today, comprise a large number of battery cells arranged in an outer housing. Malfunctions of the battery system can sometimes lead to uncontrolled heat generation in the battery system. In addition, the regular charging of such battery systems is also accompanied by heat generation in the individual battery cells, whereby the faster the charging process takes place, the more heat is generated. Excessive or even uncontrolled heat development can cause massive damage to the battery system. For this reason, corresponding battery systems are cooled.

In order to compete with combustion systems, the automotive industry is endeavoring to shorten the charging times for battery systems. Accordingly, there is a need for improved cooling systems to efficiently dissipate the large amounts of heat generated during the shorter and shorter charging processes in the battery systems. While battery systems have long been cooled indirectly with the aid of cooling plates through which a coolant flows and which are arranged underneath the battery cells, a process known as immersion cooling has also been used in recent times. In this process, a coolant circulating in a coolant circuit is introduced into the housing of the battery system and passed through it in such a way that the coolant flows directly around the individual battery cells and immerses them in it. Due to the direct contact between the coolant and the individual battery cells and the large contact surface, the heat is removed very efficiently, but at the same time special requirements must be placed on the quality of the coolant in order to ensure safe operation of the battery system. In addition to the correct temperature control, the moisture content of the coolant is a key criterion. If the coolant contains too much water, there is a risk of a short circuit within the battery system due to the increased electrical conductivity of the coolant. In addition, the individual battery cells are exposed to an increased risk of corrosion due to condensed water. For these reasons, the coolant is permanently treated within the coolant circuit.

Temperature-related pressure fluctuations in the coolant circuit can make it necessary to equalize the pressure between the coolant circuit and the environment. For this purpose, it is known from the state of the art to provide venting elements via which air can be exchanged with the environment. However, there is a risk that, in the course of pressure compensation, air flowing into a coolant reservoir from outside is loaded with moisture, which is introduced into the coolant and increases its moisture content in an undesirable manner. For the reasons mentioned above, the moisture introduced must be removed from the coolant.

Devices are already known in the prior art that can be used to remove moisture from the coolant of an immersion-cooled battery system. For example, US 2020/0058975 A1 describes a battery system comprising a treatment circuit in which the coolant is tempered and freed from impurities. In particular, the treatment circuit comprises a drying element comprising a drying agent, via which water can be removed from the coolant.

### Summary

To ensure a consistently high quality of the coolant, it is necessary to replace the drying agent arranged in the drying element from time to time. It is also necessary to completely replace the coolant in the coolant circuit after certain operating times.

It is the object of the embodiments to provide a drying element for attachment to a coolant reservoir in a coolant circuit, in particular to a coolant reservoir in a coolant circuit of an immersion-cooled battery system, which has particular advantages with regard to regularly required maintenance work. It is a further object of the embodiments to provide a coolant reservoir with such a drying element.

These problems are solved by an air drying element according to patent claim 1, by the use of such an air drying element according to patent claim 9 and by a coolant reservoir with such an air drying element according to patent claim 10.

Advantageous embodiments and further developments of the embodiments are the subject of the dependent claims.

The embodiments relate to an air drying element for attachment to a coolant reservoir in a coolant circuit, the coolant reservoir comprising a coolant outlet, and the air drying element comprising a housing comprising an air-permeable housing wall in which a drying agent is arranged. The air drying element further comprises a sealing device configured to seal the coolant outlet when the air drying element is in a position of use.

In other words, the embodiments propose an air drying element for attachment to a coolant reservoir, which on the one hand serves to dehumidify air flowing into the coolant reservoir from the environment, but which at the same time also serves to seal a coolant outlet formed on the coolant reservoir.

In order to maintain the quality of a coolant circulating, for example, in a coolant circuit of an immersion-cooled battery system, it is permanently treated within the coolant circuit. Irrespective of this, the coolant must be completely replaced from time to time. For this reason, a coolant outlet is usually provided on a coolant reservoir, via which the coolant can be completely or partially drained. It is also necessary to replace the drying agent in the air drying element at regular intervals.

The embodiments are based on the idea of coupling the regular replacement of the coolant to the likewise regularly required replacement of the drying agent. For this purpose, the embodiments propose an air drying element which has a housing in which a drying agent is arranged and which furthermore comprises a sealing device by means of which a coolant outlet formed on the coolant reservoir can be sealed. The drying agent reservoir and the sealing device for sealing the coolant outlet are thus two integral components of the air drying element. This can be attached to a coolant reservoir, whereby the sealing device seals the coolant outlet of the coolant reservoir when the air drying element is in the position of use. If the air drying element is removed from the coolant reservoir because the drying agent needs to be replaced, the sealing device on the air drying element automatically releases the coolant outlet at the same time and the coolant can drain from the coolant reservoir.

The air drying element can be designed as a complete replacement part, which is replaced by a completely new air drying element when the drying agent needs to be replaced. This is then reattached to the coolant reservoir and the coolant outlet is closed again by the sealing device of the new air drying element. Fresh coolant can then be filled into the coolant reservoir. Alternatively, the air drying element can also be designed so that only the drying agent is replaced after the air drying element is removed from the coolant reservoir. The air drying element with the new drying agent is then reattached to the coolant reservoir and the coolant outlet is closed again by the sealing device.

It is essential in terms of the embodiments that each time the air drying element is removed for the purpose of replacing the drying agent, the coolant outlet is also automatically released, and the coolant flows out of the coolant reservoir. In this way, the air drying element according to the embodiments makes it particularly easy, quick, and efficient to carry out the regularly required maintenance work relating to the drying agent and to the coolant at the same time.

One embodiment may include the air drying element further comprising a rod-shaped extension extending from the housing and comprising a free end facing away from the housing. The sealing device may be arranged at the free end. In other words, the housing, in which the drying agent is arranged, can have a rod-shaped extension molded onto it, which extends in the vertical direction and through the coolant when the air drying element is in the position of use and at the free end of which the sealing device is formed. The sealing device is designed and dimensioned in such a way that it is suitable for sealingly closing the coolant outlet of the coolant reservoir.

In particular, the sealing device may comprise a sealing element, for example a sealing ring, which allows the coolant outlet to be sealed in a liquid-tight manner.

According to a further proposal of the embodiments, the air drying element may further comprise a cover element substantially covering the housing and being formed integrally with the housing, the cover element being a venting element via which air between the coolant reservoir and an environment is exchangeable for pressure compensation.

In other words, the air drying element can comprise a cover element, which is formed in one piece with the air drying element and substantially covers the housing. Openings can be formed in the cover element to allow air exchange between the coolant reservoir and the environment. In this way, ambient air flowing in from the outside through the venting element is forced to pass through the housing storing the drying agent, so that moisture is immediately removed from the incoming air.

It may be provided that the cover element may include an external thread configured to be screwed into an internal thread of the coolant reservoir, so that the air drying element is attached to the coolant reservoir and the coolant outlet of the coolant reservoir is sealed by the sealing device, and be screwed out of the internal thread, so that the air drying element is detached from the coolant reservoir and the coolant outlet is opened. The air drying element is designed and dimensioned in such a way that the coolant outlet is closed by the sealing device when the air drying element is fully screwed in. Unscrewing the air drying element from the coolant reservoir releases the coolant outlet.

The cover element may comprise a sealing element arranged on an outside of the cover element, in particular a sealing ring, via which the air drying element can be sealed against the coolant reservoir. In this way, ambient air can be prevented from entering the coolant reservoir via any gaps between the air drying element and the coolant reservoir.

The air drying element may be essentially rotationally symmetrical. In particular, the housing and the cover element can have a round cross-section, whereby the diameter of the housing can be larger than the height of the housing. In this way, the housing can be very compact and at the same time provide a large effective surface for the dehumidification process.

The embodiments also relate to a use of the air drying element for dehumidifying the coolant reservoir in the coolant circuit of an immersion-cooled battery system.

Finally, the embodiments also relate to a coolant reservoir for receiving a coolant circulating in the coolant circuit of an immersion-cooled battery system, the coolant reservoir comprising the coolant outlet and the air drying element.

In other words, the embodiments also relate to a coolant reservoir with a coolant outlet and an air drying element, wherein a sealing device is formed on the air drying element, by means of which the coolant outlet of the coolant reservoir is sealed in the position of use of the air drying element.

### Brief Description of Drawings

In the following, the embodiments are explained in more detail with reference to an embodiment example and with reference to the accompanying drawings.
Fig. 1 is an exploded view of an air drying element according to the embodiments.
Fig. 2 is a sectional view of an air drying element attached to a coolant reservoir in the position of use.
Fig. 3 is a sectional view analogous to Fig. 2, with the air drying element already partially unscrewed from the coolant reservoir.

### Description of Embodiments

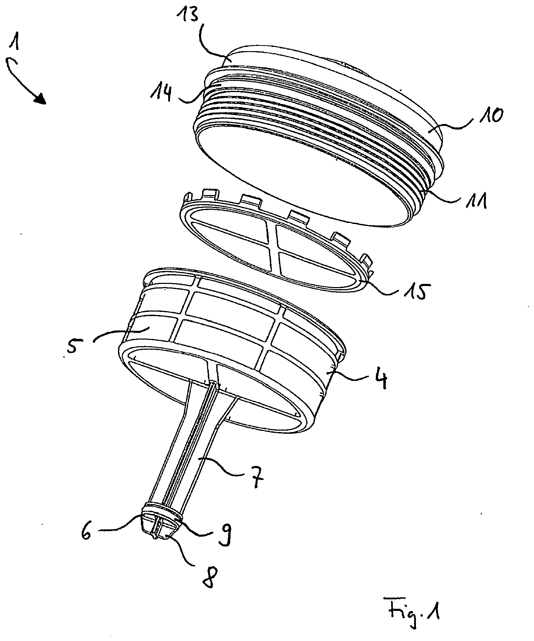

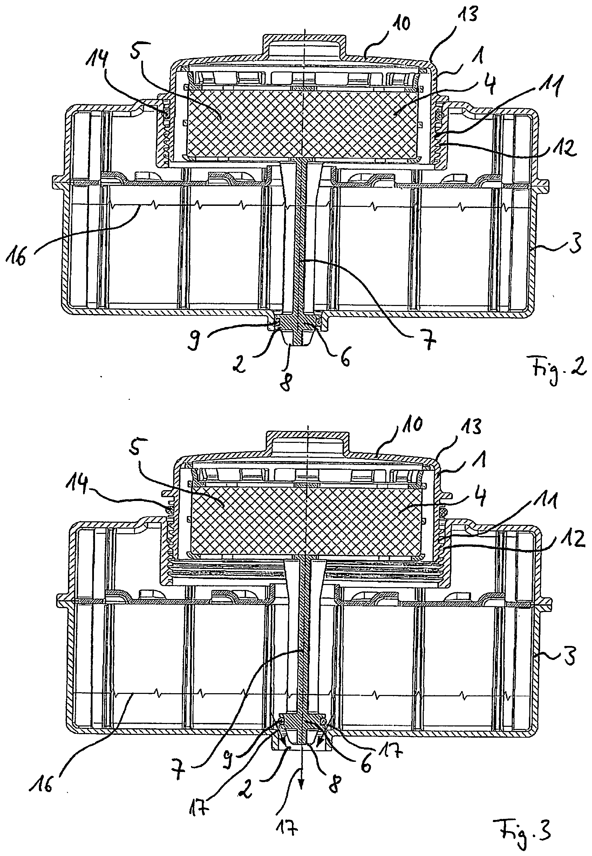

Fig. 1 shows an air drying element according to the embodiments, designated as a whole as 1, which is suitable for being attached to a coolant reservoir 3 in a coolant circuit. Figs. 2 and 3 show sectional views of the air drying element 1 in the position of use, attached to a coolant reservoir 3.

The air drying element 1 comprises a housing 4 with an air-permeable housing wall 5, for example comprising an air-permeable fabric. The housing 4 is closed at the top by an air-permeable housing cover 15. A drying agent, not shown in the figures, for example in granular form, is arranged in the housing 4, which is suitable for removing moisture from air flowing through the housing 4.

The housing 4 is covered by a cover element 10, which is integral with the housing 4 and acts as a venting element. For this purpose, the cover element 10 has openings, not shown in the figures, through which, for the purpose of pressure compensation, air can flow from the environment into the coolant reservoir 3 and flow out of the coolant reservoir 3 to the outside. Air that flows in from the outside via the cover element 10 is inevitably guided through the housing 4 positioned below the cover element 10, where moisture is removed from the air. The air dried in this way can then exit the housing 4 and enter the coolant reservoir 3.

The air drying element 1 also comprises a sealing device 6, by means of which a coolant outlet 2 formed on the coolant reservoir 3 can be sealed when the air drying element 1 is in the position of use. For this purpose, a rod-shaped extension 7 is molded onto the housing 4, at the free end 8 of which, facing away from the housing 4, the sealing device 6 is formed.

The sealing device 6 comprises a sealing element 9, which is designed here as a circumferential sealing ring. The sealing device 6 is designed and dimensioned so that it is suitable for sealing the coolant outlet 2 at the coolant reservoir 3 in the position of use of the air drying element 1.

The cover element 10 has an external thread 11, with the aid of which the air drying element 1 can be screwed into or out of an internal thread 12 formed on the coolant reservoir 3. By screwing the air drying element 1 into the coolant reservoir 3, the coolant outlet 2 formed on the coolant reservoir 3 can be sealingly closed by the sealing device 6, while the coolant outlet 2 can be opened by unscrewing the air drying element 1 from the coolant reservoir 3.

The cover element 10 has a sealing element 14 on its outside 13, which is also designed as a circumferential sealing ring. The sealing element 14 is arranged above the external thread 11 in the illustration of the figures. In this way, ambient air can be prevented from entering the coolant reservoir 3 in an uncontrolled manner through gaps between the air drying element 1 and the coolant reservoir 3, for example in the area of the cooperating threads 11 and 12. Air can therefore only enter the coolant reservoir 3 via the cover element 10, which acts as a venting element, whereby the air entering in this way is immediately dehumidified when it flows through the housing 4.

The air drying element 1 is essentially rotationally symmetrical. In particular, the housing 4 and the cover element 10 have a round cross-section. The housing 4 has a large diameter with a comparatively low height, so that the entire air drying element 1 is relatively compact, but has a large effective surface area for dehumidifying the incoming air. The rod-shaped extension 7 extends from the center of the underside of the housing.

Fig. 2 shows a sectional view of an air drying element 1 completely screwed into a coolant reservoir 3. In this position of use, a coolant outlet 2 formed on the coolant reservoir 3 is sealingly closed by the sealing device 6 formed on the air drying element 1. Coolant contained in the coolant reservoir 3, which is indicated by a liquid level 16 in the illustration in Fig. 1, cannot drain as long as the air drying element 1 is in the position of use, as the coolant outlet 2 is sealed by the sealing device 6. In particular, the sealing element 9, which is designed as a sealing ring, has a sealing effect against the wall of the coolant reservoir 3. It can be seen that the air drying element 1 is completely screwed into the coolant reservoir 3 via the interaction of the external thread 11 with the internal thread 12.

The drying agent stored in the housing 4 of the air drying element 1 must be replaced from time to time. For this purpose, the air drying element 1 must be removed from the coolant reservoir 3 and replaced with a new air drying element 1.

Fig. 3 shows a state in which the air drying element 1 has already been partially unscrewed from the coolant reservoir 3. At the same time, the coolant outlet 2 is automatically released by the sealing device 6 moving upwards as the air drying element 1 is unscrewed. Coolant can now drain through the coolant outlet 2, as indicated by the arrows 17. The liquid level 16 drops accordingly.

The air drying element 1 therefore enables the coolant to be replaced in a very simple and efficient manner at the same time as the air drying element 1, containing the drying agent, is replaced. This means that the coolant and the drying agent no longer need to be replaced separately, but can be replaced very efficiently in a single maintenance step.

The air drying element 1 according to the embodiments is particularly suitable for dehumidifying a coolant reservoir 3 in a coolant circuit of an immersion-cooled battery system.

### Reference Signs List

- 1: Air drying element
- 2: Coolant outlet
- 3: Coolant reservoir
- 4: Housing
- 5: Housing wall
- 6: Sealing device
- 7: Rod-shaped extension
- 8: Free end
- 9: Sealing element
- 10: Cover element
- 11: External thread
- 12: Internal thread
- 13: Outside
- 14: Sealing element
- 15: Housing cover
- 16: Liquid level
- 17: Arrow

## Claims

1. An air drying element (1) for attachment to a coolant reservoir (3) in a coolant circuit, the coolant reservoir (3) comprising a coolant outlet (2), and the air drying element (1) comprising:
a housing (4) comprising an air-permeable housing wall (5) in which a drying agent is arranged; and
a sealing device (6) configured to seal the coolant outlet (2) when the air drying element (1) is in a position of use.

2. The air drying element (1) according to claim 1, wherein the sealing device (6) is configured to:
seal the coolant outlet (2) when the air drying element (1) is attached to the coolant reservoir (3); and
open the coolant outlet (2) when the air drying element (1) is removed from the coolant reservoir (3).

3. The air drying element (1) according to claim 1 or 2, further comprising a rod-shaped extension (7) extending from the housing (4) and comprising a free end (8) facing away from the housing (4),
wherein the sealing device (6) is arranged at the free end (8).

4. The air drying element (1) according to one of claims 1 to 3, wherein the sealing device (6) comprises a sealing element (9).

5. The air drying element (1) according to one of claims 1 to 4, further comprising a cover element (10) substantially covering the housing (4) and being formed integrally with the housing (4), the cover element (10) being a venting element via which air between the coolant reservoir (3) and an environment is exchangeable for pressure compensation.

6. The air drying element (1) according to claim 5, wherein the cover element (10) comprises an external thread (11) configured to:
be screwed into an internal thread (12) of the coolant reservoir (3), so that the air drying element (1) is attached to the coolant reservoir (3) and the coolant outlet (2) of the coolant reservoir (3) is sealed by the sealing device (6); and
be screwed out of the internal thread (12), so that the air drying element (1) is detached from the coolant reservoir (3) and the coolant outlet (2) is opened.

7. The air drying element (1) according to claim 5 or 6, wherein the cover element (10) comprises a sealing element (14) arranged on an outside (13) of the cover element (10).

8. The air drying element (1) according to one of claims 1 to 7, wherein the air drying element (1) is essentially rotationally symmetrical.

9. A use of the air drying element (1) according to one of claims 1 to 8 for dehumidifying the coolant reservoir (3) in the coolant circuit of an immersion-cooled battery system.

10. A coolant reservoir (3) for receiving a coolant circulating in the coolant circuit of an immersion-cooled battery system, the coolant reservoir (3) comprising:
the coolant outlet (2); and
the air drying element (1) according to one of claims 1 to 8.
